# EUROPÄISCHE PATENTSCHRIFT

(11) **EP 1 371 447 B1**
(45) Veröffentlichungstag und Bekanntmachung des Hinweises auf die Patenterteilung: **07.09.2005**
(21) Anmeldenummer: 03012291.5
(22) Anmeldetag: 12.06.2003
(51) Int. Cl.: B23K 26/38, B29C 59/00, B60R 21/20, B29C 37/00

(54) **Verfahren zum Einbringen einer Schwächelinie geringer Reissfestigkeit in eine Airbagabdeckung und damit hergestellte Airbagabdeckung**
Method to produce a weakening line having reduced resistance to tearing in an air bag cover and air bag cover made therefrom
Procédé pour réaliser une ligne de faible résistance au déchirement dans un couvercle de coussin gonflable et couvercle de coussin gonflable ainsi réalisé

(30) Priorität: 14.06.2002 DE 10227118
(43) Veröffentlichungstag der Anmeldung: 17.12.2003
(73) Patentinhaber: JENOPTIK Automatisierungstechnik GmbH, 07745 Jena (DE)
(72) Erfinder: Lutze, Walter, 07751 Drackendorf (DE); Steinhäuser, Frank, 99441 Magdala (DE); Griebel, Martin, 07743 Jena (DE); Preuss, Norbert, 07743 Jena (DE)
(74) Vertreter: Schaller, Renate

(56) Entgegenhaltungen:
- DE-A- 10 048 636
- DE-C- 19 636 429
- US-A- 5 738 367
- US-B1- 6 247 722
- US-B1- 6 337 461

## Beschreibung

Die Erfindung betrifft ein Verfahren zur Erzeugung einer Schwächelinie mittels Laser gemäß dem Oberbegriff des Anspruchs 1 und eine Airbagabdeckung gemäß dem Oberbegriff des Anspruchs 7, wie sie aus der DE 196 36 429 C1 bekannt ist.

Aus dem Stand der Technik sind eine Vielzahl konstruktiv unterschiedlich gestalteter und technologisch hergestellter Airbagabdeckungen (nachfolgend Abdeckung) bekannt. Sie alle haben die Aufgabe, einerseits den Airbag sicher und vor Eingriffen geschützt aufzubewahren und andererseits im Falle der Aktivierung des Airbags innerhalb von Millisekunden eine Durchtrittsöffnung für den Airbag freizugeben, durch den sich der Airbag entfalten und den Fahrzeuginsassen schützen kann. Wie die letzten Jahre zeigen geht der Trend zu Abdeckungen, die vom Fahrzeuginsassen visuell nicht wahrgenommen werden können. Solche Abdeckungen werden hergestellt, indem in der Abdeckung (in der Regel bestehend aus einer steifen Trägerschicht, einer Schaumstoffschicht und einer Dekorschicht) bzw. in einzelnen Schichten der Abdeckung eine Schwächelinie erzeugt wird, die die spätere Durchtrittsöffnung bestimmt.

In der EP 0 711 627 A2 werden die Schwierigkeiten beim Erzeugen derartiger Schwächelinien mit unterschiedlichen Technologien diskutiert. Es wird erwähnt, dass die Nuttiefe der Schwächelinie sorgfältig gesteuert werden muss, um einen zuverlässigen Bruch der äußeren Deckschicht (Dekorschicht) zum genau richtigen Zeitpunkt zu bewirken. Einerseits sollte die Nuttiefe dabei nicht zu gering sein, damit der zu überwindende Widerstand beim Öffnen nicht zu groß ist, andererseits sollte genügend Material stehen bleiben, damit die Schwächelinie nicht äußerlich sichtbar wird. Es wird auch erwähnt, dass bei Deckschichten, die eine unregelmäßige Innenfläche aufweisen, die Nuttiefe so gesteuert werden muss, dass die verbleibende Restwandstärke konstant ist. Zur Lösung dieser Probleme wird in der EP 0 711 627 A2 vorgeschlagen, eine durchgehende Nut mittels eines Laserstrahles einzukerben, wobei der Laserstrahl gesteuert wird, um eine konstante Dicke des unterhalb der Nut verbleibenden Materials bzw. eine konstante Nuttiefe zu erreichen. Um Schwächelinien mit unterschiedlichem Öffnungswiderstand zu erzeugen, kann die Nut mit unterschiedlicher Tiefe erzeugt werden. Bei allen beispielhaft genannten Tiefen wird die Trägerschicht vollständig durchtrennt und wenigstens ein Teil der Schaumstoffschicht durchdrungen, bis hin zur vollständigen Durchdringung der Schaumstoffschicht in die Dekorschicht hinein. Da die Nut in jedem Fall eine durchgehende Nut ist, abgesehen von der genannten Alternative der Linie von Durchgangslöchern, die die Aufgabe der Unsichtbarkeit der Schwächelinie ohnehin nicht erfüllt, kann die unterhalb der Nut verbleibende Restwandstärke zu Minimierungen des Öffnungswiderstandes nicht unbegrenzt minimiert werden, da sonst die Nut durch Einsinken des Restmaterials in die Nut sichtbar wird. Sofern die Schaumstoffschicht als Stützschicht für die Dekorschicht wenigstens teilweise erhalten bleiben soll, kann keine Schwächung der Dekorschicht erfolgen. Für festere Folien ist es jedoch notwendig, diese zu schwächen, da ansonsten die erforderlichen Aufreißkräfte zu groß werden. Zur Schwächung der Folie wird zwingend die stützende Schaumstoffschicht im Nutbereich vollständig entfernt und es wird langfristig zum Einsinken der Dekorschicht in die Nut kommen, auch wenn die Dekorschicht nur geringfügig geschwächt wird.

Die Schaumstoffschicht als Stützschicht für die Dekorfolie im Bereich der Schwächelinie zu erhalten ist ein Grundgedanke, der zur Schwächelinie gebildet von Sacklöchern führt.
In der DE 196 36 429 C1 werden die Vorteile einer Schwächelinie durch Abtrag in Form von Sacklöchern wie folgt beschrieben:
1. Während bei der Schaffung einer Schwächelinie durch Einschneiden (z.B. in EP 0 711 627 A2 beschrieben) nur die Restwandstärke in der Schnittfuge (durchgehende Nut) als geometrische Größe zur Beeinflussung des Öffnungswiderstandes variierbar ist, kann bei einer Aneinanderreihung von Sacklöchern (Perforationslinie) auch die Stegbreite zwischen den Sacklöchern wirksam variiert werden.
2. Das Restmaterial muss beim Abtragen in Form einer Schnittlinie so stark sein, dass es nicht in die Schnittfuge einsinkt und somit sichtbar wird. Dieses Einsinken wird bei der Perforationslinie auch bei geringeren Restwandstärken durch die zwischen den Sacklöchern verbleibenden Stege, die als Stütze wirken, verhindert.
3. Eine über die gesamte Perforationslinie konstante Reißfestigkeit lässt sich auch erzielen, wenn die Sacklöcher unterschiedliche Restwandstärken aufweisen, die sich periodisch wiederholen.
Der Erzeugung von Sacklöchern unterschiedlicher Restwandstärke liegt der Gedanke zugrunde, dass geringe Restwandstärken und schmale Stege zu einer starken thermischen Belastung führen können, die ebenso wie Materialerschlaffungen infolge von Alterung dazu führen, dass das Restmaterial in die Sacklöcher einsinkt und so die Schwächelinie sichtbar wird. Um dies zu vermeiden, erfolgt ein Abtrag im periodischen Wechsel auf verschiedene Tiefen in die Dekorschicht hinein. Bei geringeren Tiefen bleiben in der Schaumstoffschicht deutlich größere Stegbreiten erhalten und die Dekorschicht wird thermisch geringer belastet. Bei einer nur geringen Erhöhung der Reißfestigkeit wird die Gefahr der entstehenden Sichtbarkeit besser vermieden.
Wie praktische Versuche jedoch gezeigt haben, muss der Abstand der in die Dekorschicht eindringenden Sacklöcher sehr groß gewählt werden, damit tatsächlich ein Steg aus Schaumstoff erhalten bleibt. Die für den Abtrag der Trägerschicht und Dekorschicht notwendige Strahlungsenergie ist so hoch, dass die Schaumstoffschicht großräumig um das Sackloch verbrennt. Der große Abstand der Sacklöcher führt jedoch insbesondere bei festeren Materialien der Dekorschicht dazu, dass die notwendige Öffnungskraft zu hoch wird.

Beide aufgezeigten Lösungen sind Kompromisslösungen zwischen einer möglichst geringen Restwandstärke bzw. einer geringen Stegbreite einerseits, um den Öffnungswiderstand der Schwächelinie gering zu gestalten und einer ausreichend großen Restwandstärke und großen Stegbreite andererseits, damit die Schwächelinie seitens des Insassen nicht sichtbar wird.

In der DE 195 40 563 A1 ist eine mit einer Folie überzogene Instrumententafel für Kraftfahrzeuge mit einer integrierten Airbagklappe gezeigt. Die Folie (Dekorschicht) weist eine Schwächelinie, gebildet aus einer Aneinanderreihung, das Material vollständig durchdringende Perforationslöcher, auf. Der Erfindungsgedanke besteht bei dieser Lösung darin, dass die visuelle Wahrnehmbarkeit der Schwächelinie dadurch verringert wird, dass die Schwächelinie von einer laserbehandelten Spur überdeckt wird.

Ebenfalls mit dem Ziel, eine visuell nicht wahrnehmbare Schwächelinie zu erzeugen, wird in der DE 196 36 429 A1 vorgeschlagen, eine um die eigentliche Sollbruchlinie alternierende Schwächelinie zu erzeugen, die der Oberflächenstruktur der Dekorschicht ähnlich ist. (In den vorangenannten Lösungen ist die Linienführung der Schwächelinie gleich der der Sollbruchlinie.)

Die beiden letztgenannten Lösungen erfordern einen höheren gerätetechnischen und technologischen Aufwand sowie längere Bearbeitungszeiten. Zugunsten eines geringen Öffnungswiderstandes, der mit einer durchgehenden Perforation bestmöglich erreichbar ist, wird auf die Unsichtbarkeit verzichtet. Diese wird jedoch durch die Überlagerung eine die Schwächelinie "verwischende" zweite Laserlinie bzw. eine visuell in der Oberfläche kaum auflösbare Linienführung wieder hergestellt.

Der Erfindung liegt die Aufgabe zugrunde, ein Verfahren zu schaffen, bei dem mittels Laser in eine Airbagabdeckung eine Schwächelinie eingebracht wird, deren Öffnungswiderstand gegenüber mit herkömmlichen Verfahren hergestellten Schwächelinien, bei denen nicht durchperforiert wird, deutlich geringer ist, jedoch die Schwächelinie wesentlich schlechter visuell wahrnehmbarer ist.

Weiterhin ist es eine Aufgabe der Erfindung, eine Airbagabdeckung mit einer integrierten Schwächlinie aufzuzeigen, die bei Einwirkung einer nur geringen Öffnungskraft eine Öffnung zum Durchtritt für den Airbag freigibt und bei der die integrierte Schwächelinie seitens des Fahrzeuginsassen nicht bzw. kaum wahrnehmbar ist.

Diese Aufgabe wird für ein erfindungsgemäßes Verfahren gemäß dem Oberbegriff des Anspruches 1 dadurch gelöst, dass im Wechsel erste Sacklochgruppen einer Länge a und einer Anzahl x von flachen Sacklöchern 4.1 nur in das Trägermaterial 1 sowie zweite Sacklochgruppen einer Länge b und einer Anzahl y von tiefen Sacklöchern 4.2 durch das Trägermaterial 1 und die Schaumstoffschicht 2 hindurch in die Dekorschicht 3 erzeugt werden und im Bereich der ersten Sacklochgruppen die Schaumstoffschicht als Stützschicht erhalten bleibt.

Vorteilhafte Ausführungen des Verfahrens sind in den Unteransprüchen dargelegt.

Für eine erfindungsgemäße Airbagabdeckung gemäß dem Oberbegriff des Anspruches 7 wird die Aufgabe der Erfindung dadurch gelöst, dass die Anordnung der Sacklöcher 4 aus im Wechsel angeordneten ersten Sacklochgruppen einer Länge a und einer Anzahl x von flachen Sacklöchern 4.1 und zweiten Sacklochgruppen einer Länge b und einer Anzahl y von tiefen Sacklöchern 4.2 besteht und die flachen Sacklöcher 4.1 nur in das Trägermaterial 1 und die tiefen Sacklöcher 4.2 durch das Trägermaterial 1 und die Schaumstoffschicht 2 hindurch in die Dekorschicht 3 ragen, so dass im Bereich der ersten Sacklochgruppen die Schaumstoffschicht 2 als Stützschicht erhalten bleibt.

Der Stand der Technik zeigt, dass es nur schwer möglich ist, die sich scheinbar entgegenstehenden Forderungen einerseits nach einem geringen Öffnungswiderstand der Schwächelinie und andererseits nach einer Unsichtbarkeit der Schwächelinie zu vereinen. Nur die beiden letztgenannten Lösungen können beide Bedingung erfüllen, jedoch mit einem nicht akzeptablen erhöhten Aufwand. Das Wesen der Erfindung besteht in der Idee, den Öffnungswiderstand der Schwächelinie bei Erhöhung des verbleibenden, als Stütze wirkenden Schaustoffvolumens zu verringern, in dem anstelle einer gleichmäßigen Schwächung der Schwächelinie über ihre Länge sich abwechselnde Schwächebereiche gebildet werden.
Erfindungsgemäß werden dazu in eine Airbagabdeckung, bestehend aus einer Trägerschicht, einer Schaumstoffschicht und einer Dekorschicht, mittels Laserstrahlung eine Reihe von Sacklöchern erzeugt, wobei im Wechsel erste Sacklochgruppen, bestehend aus mehreren flachen Sacklöchern nur in das Trägermaterial und zweite Sacklochgruppen, bestehend aus mehreren tiefen Sacklöchern, die sich durch das Trägermaterial und die Schaumstoffschicht hindurch in die Dekorschicht erstrecken, erzeugt werden. Da die Schwächung der Dekorschicht über die Schwächelinie nicht durchgehend, sondern nur punkt- bzw. strichweise erfolgt, verringert sich auch die visuelle Wahrnehmbarkeit.

Die flachen Sacklöcher durchdringen das Trägermaterial weitestgehend bis vollständig. Eine gering verbleibende Restwandstärke des Trägermaterials erhöht die notwendige Öffnungskraft kaum, da es sich grundsätzlich um ein sprödes, leicht brechendes Material handelt. Eine gering verbleibende Restwandstärke des Trägermaterials hat den Vorteil, dass die Schaumstoffschicht kaum thermisch belastet wird und daher vollständig erhalten bleibt. Die Sacklöcher können nebeneinander mit einem dazwischen verbleibenden Steg erzeugt werden, oder aber überlappend eingebracht werden, bis hin zu einer Überlappung, durch die ein nahezu kontinuierlicher Schnitt in der Trägerschicht entsteht. Die Anzahl der flachen Sacklöcher, deren Mittenabstand und Tiefe kann materialabhängig gewählt werden.

Die tiefen Sacklöcher erstrecken sich durch die Trägerschicht und die Schaumstoffschicht hindurch bis unter die Oberfläche der Dekorschicht. Eine definierte Restwandstärke zu erhalten spielt gegenüber den beiden erstgenannten Lösungen des Standes der Technik eine nur untergeordnete Rolle, da das definierte Öffnungsverhalten bei dieser Lösung im Wesentlichen durch das Regime der Sacklochgruppen festgelegt wird, bestimmt durch die jeweilige Anzahl von Sacklöchern und deren Abstand bzw. deren Überlappungsgrad. Vorteilhaft ist die Länge der zweiten Sacklochgruppe größer als die Länge der ersten Sacklochgruppe. Es ist erfindungswesentlich, dass im Unterschied zu der in der DE 196 36 429 C1 beschriebenen Lösung die stützende Schaumstoffschicht nicht als Stege zwischen den einzelnen Sacklöchern, sondern als Schaumstoffbrücke oberhalb der von flachen Sacklöchern gebildeten ersten Sacklochgruppen erhalten bleibt. Die tiefen Sacklöcher der zweiten Sacklochgruppen können dichter nebeneinander erzeugt werden, da zwischen ihnen kein Schaumstoffsteg erhalten werden muss. Je enger sie zueinander angeordnet sind, desto geringer wird die erforderliche Öffnungskraft, selbst wenn zwischen den einzelnen zweiten Sacklochgruppen von tiefen Sacklöchern die Dekorschicht jeweils über die Länge einer ersten Sacklochgruppe von flachen Sacklöchern gar nicht geschwächt wird.

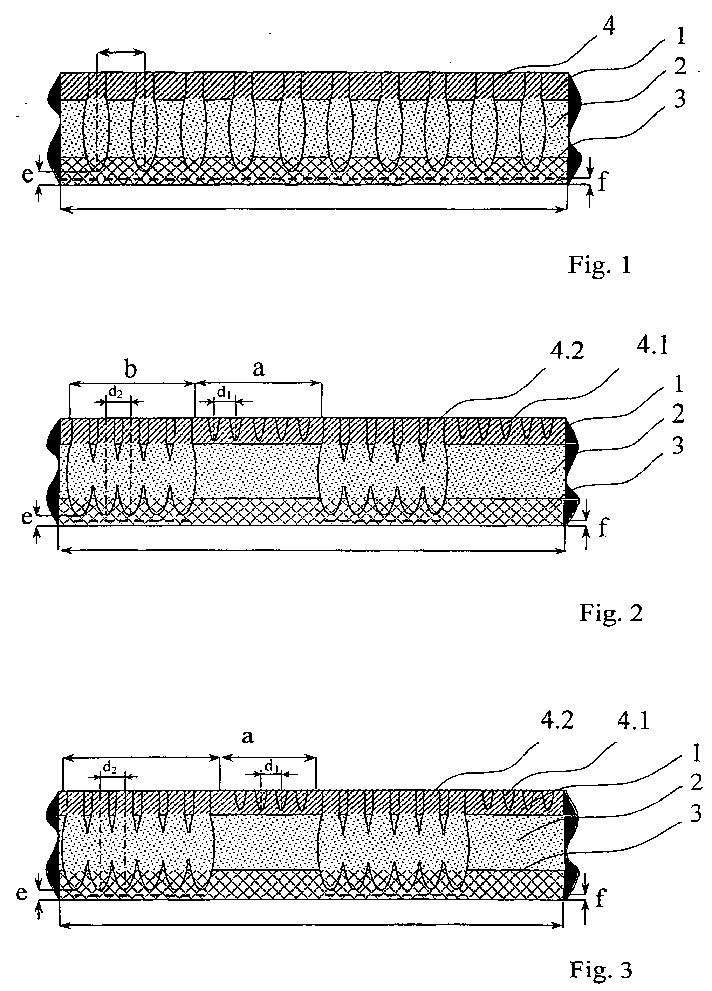

Die Erfindung soll nachfolgend an einigen Ausführungsbeispielen an Hand von Zeichnungen näher erläutert werden. Hierzu zeigen:
- Fig. 1: eine Schwächelinie hergestellt gemäß dem Stand der Technik
- Fig. 2: ein erstes Ausführungsbeispiel für eine erfindungsgemäß hergestellte Schwächelinie
- Fig. 3: ein zweites Ausführungsbeispiel für eine erfindungsgemäß hergestellte Schwächelinie
- Fig. 4: ein drittes Ausführungsbeispiel für eine erfindungsgemäß hergestellte Schwächelinie
- Fig. 5: ein viertes Ausführungsbeispiel für eine erfindungsgemäß hergestellte Schwächelinie
- Fig. 6: ein fünftes Ausführungsbeispiel für eine erfindungsgemäß hergestellte Schwächelinie
- Fig. 7: ein sechstes Ausführungsbeispiel für eine erfindungsgemäß hergestellte Schwächelinie
Zum besseren Verständnis der Erfindung ist in Fig. 1 eine gemäß dem Stand der Technik geschwächte Airbagabdeckung bestehend aus einer Trägerschicht 1, einer Schaumstoffschicht 2 und einer Dekorschicht 3 im Schnittbild dargestellt. Der Schnitt verläuft durch eine Schwächelinie gebildet von einer Vielzahl auf einer Linie angeordneten Sacklöchern 4. Als Material für die Trägerschicht 1 kommen alle hierfür üblicherweise verwendeten Materialien wie z.B. Polypropylen (PP) mit und ohne Glasfaserverstärkung, oder Holzformstoffe in Frage. Die Dekorschicht 3 kann z.B. aus thermoplastischem Polyolifin (TPO), Polyurethan (PU), Polyvenylchlorid (PVC) oder einem anderen in der Automobilbranche hierfür üblicherweise verwendeten Material bestehen.
Auf dem dargestellten Ausschnitt über die Ausschnittslänge c sind 10 Sacklöcher 4 gezeigt mit einem Mittenabstand d zueinander und einer jeweiligen Restwandstärke e unterhalb der Sacklöcher 4 in der Dekorschicht 3. Der Mittenabstand d ist so gering wie möglich gewählt, so dass ein Minimum an Steg in der Schaumstoffschicht 2 erhalten bleibt, d.h. würde man zur Verringerung der notwendigen Aufreißkraft den Mittenabstand d weiter verringern, würden durch die großvolumigere Verbrennung der Schaumstoffschicht 2 gegenüber dem Abtragsvolumen in der Trägerschicht 1 und der Dekorschicht 3 die Stege verschwinden. Je geringer die Restwandstärke e, desto größer ist die Einfalltiefe f. Eine Reduzierung der Aufreißkraft, bewirkt durch eine Verringerung der Mittenabstände d (die stützenden Schaumstoffstege verschwinden völlig) und/oder der Restwandstärke e, hat ein stärkeres Einsinken der Dekorschicht 3 über die Länge der Schwächelinie mit einer größer werdenden Einsinktiefe f zur Folge.

Fig. 2 zeigt in einer Airbagabdeckung gleichen Aufbaus ein erstes Ausführungsbeispiel für eine erfindungsgemäß eingebrachte Schwächelinie über eine gleiche Ausschnittslänge c wie in Fig. 1 dargestellt.
Die Sacklöcher 4 sind auch hier nebeneinander auf einer Linie angeordnet, erstrecken sich jedoch unterschiedlich tief in die Airbagabdeckung, entweder nur in die Trägerschicht 1 oder bis in die Dekorschicht 3 hinein. Für den Mittenabstand d (im weiteren d₁ und d₂) wurde gegenüber Fig. 1 der hälftige Betrag gewählt, so dass in die Dekorschicht 3 eine gleiche Anzahl von Sacklöchern 4 eingebracht ist wie bei dem in Fig. 1 gezeigten Stand der Technik. Für die weitere Beschreibung werden die Sacklöcher 4, die sich in die Dekorfolie 3 erstrecken, als tiefe Sacklöcher 4.2 bezeichnet und die Sacklöcher 4, die sich nur in die Trägerschicht 1 erstrecken, als flache Sacklöcher 4.1. Die nebeneinander liegenden flachen Sacklöcher 4.1 mit einer Anzahl x bilden jeweils eine erste Sacklochgruppe der Länge a, während die nebeneinander liegenden tiefen Sacklöcher 4.2 mit der Anzahl y jeweils eine zweite Sacklochgruppe der Länge b bilden. Bei dem in Fig. 2 gezeigten Beispiel sind x und y gleich Fünf. Da für die Mittenabstände d₁ der flachen Sacklöcher 4.1 der gleiche Betrag gewählt wurde wie für die Mittenabstände d₂ der tiefen Sacklöcher 4.2, sind die Längen a und b ebenfalls gleich.
Wie Versuche gezeigt haben, ist bei einer gleichen Materialkomposition der Airbagabdeckung und einer Restwandstärke e unterhalb der tiefen Sacklöcher 4.2 gleich der Restwandstärke e der Lösung des Standes der Technik die notwendige Aufreißkraft für dieses erste Ausführungsbeispiel und für die gemäß dem Stand der Technik gezeigte Lösung nahezu gleich. Ein mögliches Einsinken der Dekorschicht 3 in die Schwächelinie (in den Figuren als Strichlinie dargestellt) ist jedoch auf die Abschnitte der Länge b begrenzt, da über die Abschnitte der Länge a die Schaumstoffschicht 2 unbeschädigt als Stützschicht erhalten bleibt und die Schwächelinie daher nicht bzw. weniger vom menschlichen Auge wahrgenommen wird.
Eine deutliche Verringerung der Aufreißkraft wird erzielt, wenn gemäß einem zweiten Ausführungsbeispiel, gezeigt in Fig. 3, bei Beibehaltung der Mittenabstände d₁ und d₂ die Anzahl y der tiefen Sacklöcher 4.2 erhöht und die Anzahl x der flachen Sacklöcher 4.1 verringert wird. An der optischen Wahrnehmbarkeit der Schwächelinie ändert sich trotz Verringerung der Aufreißkraft höchstens unwesentlich gegenüber dem ersten Ausführungsbeispiel.

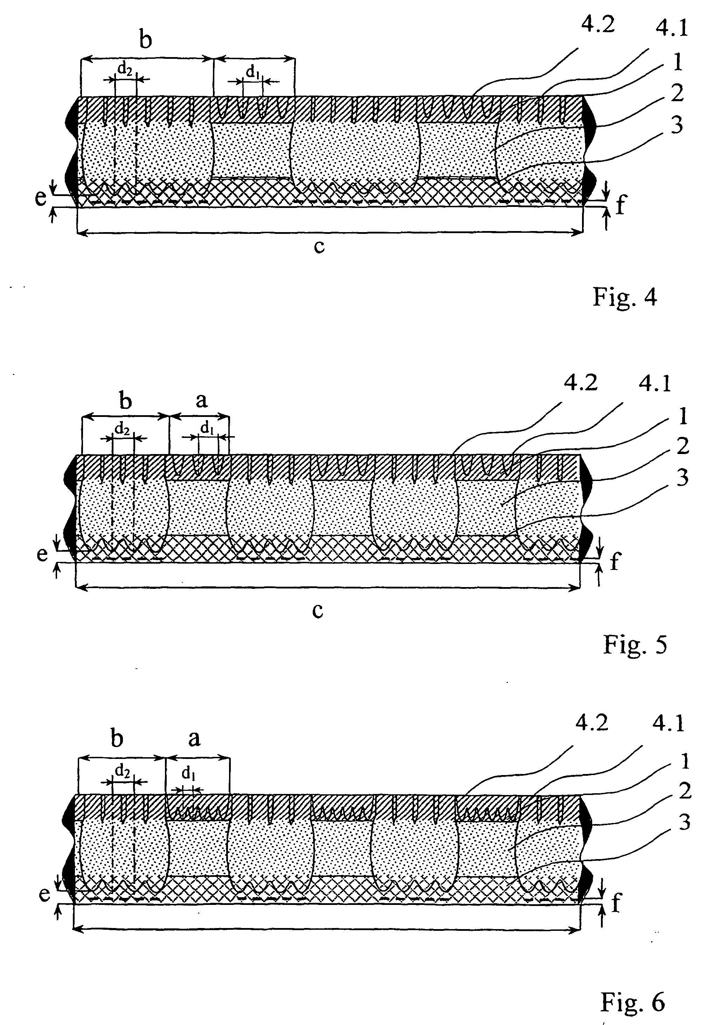

In den Fig. 4 bis 7 sind weitere Ausführungsbeispiele gezeigt, die sich durch die Wahl der Mittenabstände d₁ und d₂, der Länge a und b der Sacklochgruppen oder dem Verhältnis der Anzahl x der flachen Sacklöcher 4.1 zur Anzahl y der tiefen Sacklöcher 4.2 unterscheiden. Sie sind in Abhängigkeit von der Materialkomposition der Airbagabdeckung mehr oder weniger vorteilhaft geeignet. So wird man bei Materialien für die Dekorschicht 3 mit höherer Reißfestigkeit eine Ausführung wählen, bei der die Dekorschicht 3 mit einem geringeren Mittenabstand d₂ und/oder einer höheren Anzahl y der tiefen Sacklöcher 4.2 geschwächt wird, während bei Materialien für die Trägerschicht 1 mit höherer Bruchfestigkeit der Mittenabstand d₁ verringert wird und/ oder die Anzahl x der flachen Sacklöcher 4.1 erhöht wird. In Abhängigkeit von der Reißfestigkeit der Dekorschicht 3 (bestimmt durch Dicke und Materialeigenschaften der Dekorschicht 3) und der Bruchfestigkeit der Trägerschicht 1 (bestimmt durch Dicke, Form und Materialeigenschaften der Trägerschicht 1) kann der Fachmann die Schwächung der Airbagabdeckung mehr auf die Schwächung der Trägerschicht 1 oder mehr auf die Schwächung der Dekorschicht 3 verlagern.

Bei dem in Fig. 4 gezeigten dritten Ausführungsbeispiel wurde gegenüber dem zweiten Ausführungsbeispiel (Fig. 3) der Mittenabstand d₂ der tiefen Sacklöcher 4.2 verringert, so dass die in der Dekorschicht 3 entstehenden tiefen Sacklöcher 4.2 ineinander übergehen und die Dekorschicht 3 stärker schwächen. Diese Ausführung ist daher besonders geeignet für Airbagabdeckungen mit einer Dekorschicht 3 von hoher Reißfestigkeit.

In Fig. 5 ist ein viertes Ausführungsbeispiel gezeigt, bei welchem die Längen a und b der Sacklochgruppen gegenüber dem dritten Ausführungsbeispiel verkürzt wurden, indem die Anzahl y der tiefen Sacklöcher 4.2 auf vier und die Anzahl x der flachen Sacklöcher 4.1 auf drei reduziert wurden. Dieses Ausführungsbeispiel hat sich praktisch als besonders vorteilhaft erwiesen z.B. für eine Airbagabdeckung mit einer 3 mm dicken Trägerschicht 1 aus PC-ABS, einer 9 mm dicken Schaumstoffschicht 2 und einer 1,2 mm dicken Dekorschicht 3 aus TPO oder für eine Airbagabdeckung mit einer 3 mm dicken Trägerschicht 1 aus PP, einer 7 mm dicken Schaumstoffschicht 2 und einer ca. 1 mm dicken PU-Sprühhaut als Dekorschicht 3.

Fig. 6 zeigt ein fünftes Ausführungsbeispiel, bei dem gegenüber den bisher aufgezeigten Beispielen auch die Trägerschicht 1 durch eine Verringerung der Mittenabstände d₁ und damit Einbringung einer größeren Anzahl x von flachen Sacklöchern 4.1 über die Länge a stärker geschwächt wird. Dieses Beispiel ist entsprechend vorteilhaft, wenn die Trägerschicht 1 eine hohe Bruchfestigkeit aufweist.

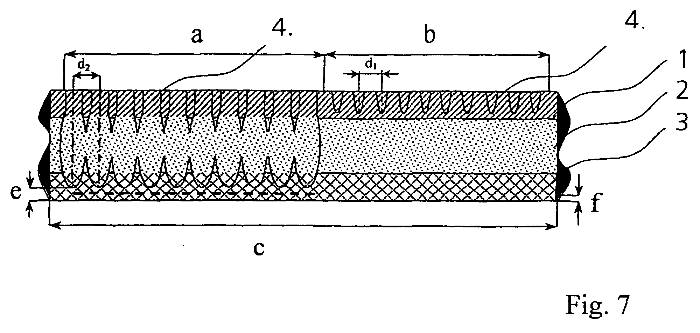

In einem sechsten Ausführungsbeispiel gemäß Fig. 7 wurden gegenüber dem zweiten Ausführungsbeispiel die Längen a und b der Sacklochgruppen durch Verdopplung der Anzahl y der tiefen Sacklöcher 4.2 und der Anzahl x der flachen Sacklöcher 4.1 vergrößert. Diese Ausführung hat sich als besonders vorteilhaft erwiesen für Airbagabdeckungen mit einer Schaumstoffschicht 2 größer 10 mm.
Zur Erzeugung der Schwächelinie wird gleich den aus dem Stand der Technik bekannten Verfahren ein gepulster Laser mit einer Pulsfrequenz bis zu 5000 Hz und einer Laserleistung bis zu 2 kW auf die Airbagabdeckung gerichtet. Um die erforderliche Relativbewegung zwischen der Laserstrahlung und der Abdeckung zu bewirken, wird vorteilhaft die Abdeckung mit einer Transportgeschwindigkeit bis zu 200 mm/s in einer bestimmten Transportrichtung unter dem ortsfesten Laser entlang bewegt, so dass der Laser auf der Airbagabdeckung die gewünschte Schwächelinie beschreibt. D.h. die Abdeckung wird kontinuierlich transportiert, unabhängig davon, ob der Laser arbeitet oder nicht. Dadurch entstehen die tiefen Sacklöcher 4.2, die mit einer deutlich höheren Anzahl von Laserpulsen erzeugt werden als die flachen Sacklöcher 4.1 mit einer größeren Ausdehnung in Transportrichtung. Damit die Mittenabstände d₁ und d₂ nicht nur zwischen den Sacklöchern 4 innerhalb einer Sacklochgruppe, sondern auch zwischen zwei Sacklöchern 4 benachbarter Sacklochgruppen konstant sind, wird der Laser so gesteuert, dass die Zeit zwischen dem Abschalten des Lasers nach Fertigstellung eines Sackloches und dem Anschalten des Lasers zur Erzeugung eines weiteren Sackloches konstant gehalten wird. Damit erhöht sich die Reproduzierbarkeit der Reißfestigkeit über die Schwächelinie.

### Aufstellung der verwendeten Bezugszeichen

- 1: Trägerschicht
- 2: Schaumstoffschicht
- 3: Dekorschicht
- 4: Sacklöcher
- 4.1: flache Sacklöcher
- 4.2: tiefe Sacklöcher

- a: Länge der ersten Sacklochgruppe
- b: Länge der zweiten Sacklochgruppe
- c: Ausschnittslänge
- d: Mittenabstand
- e: Restwandstärke
- f: Einsinktiefe
- x: Anzahl der flachen Löcher
- y: Anzahl der tiefen Löcher

## Patentansprüche

1. Verfahren zum Einbringen einer Schwächelinie geringen Öffnungswiderstandes in eine Airbagabdeckung, bestehend aus einer Trägerschicht (1), einer Schaumstoffschicht (2) und einer Dekorschicht (3), bei dem mittels Laserstrahlung eine Reihe von Sacklöchern (4) erzeugt wird, **dadurch gekennzeichnet,**
**dass** im Wechsel erste Sacklochgruppen einer Länge (a) und einer Anzahl (x) von mehreren flachen Sacklöchern (4.1) nur in das Trägermaterial (1) sowie zweite Sacklochgruppen einer Länge (b) und einer Anzahl (y) von mehreren tiefen Sacklöchern (4.2) durch das Trägermaterial (1) und die Schaumstoffschicht (2) hindurch in die Dekorschicht (3) erzeugt werden und im Bereich der ersten Sacklochgruppen die Schaumstoffschicht (2) als Stützschicht erhalten bleibt.

2. Verfahren nach Anspruch 1, **dadurch gekennzeichnet,**
**dass** die zweiten Sacklochgruppen mit einer größeren Länge (b) als die ersten Sacklochgruppen mit einer Länge (a) erzeugt werden.

3. Verfahren nach Anspruch 1 oder 2, **dadurch gekennzeichnet,**
**dass** die tiefen Sacklöcher (4.2) in einer größeren Anzahl (y) erzeugt werden als die der flachen Sacklöcher (4.1) in einer Anzahl (x).

4. Verfahren nach einem der Ansprüche 1 bis 3, **dadurch gekennzeichnet,**
**dass** die Sacklöcher (4) überlappend erzeugt werden.

5. Verfahren nach einem der Ansprüche 1 bis 4, **dadurch gekennzeichnet,**
**dass** die tiefen Sacklöcher (4.2) bis auf eine Restwandstärke (e) von kleiner einem zehntel Millimeter in die Dekorschicht (3) erzeugt werden.

6. Verfahren nach einem der Ansprüche 1 bis 5, **dadurch gekennzeichnet,**
**dass** die Laserstrahlung gepulst ist und so angesteuert wird, dass die Mittenabstände (d) aller Sacklöcher (4) zueinander konstant sind.

7. Airbagabdeckung mit einer Schwächelinie geringen Öffnungswiderstandes, bestehend aus einer Trägerschicht (1), einer Schaumstoffschicht (2) und einer Dekorschicht (3) und einer sich in die Dekorschicht (3) erstreckende linienförmige Anordnung von Sacklöchern, die Schwächelinie geringen Öffnungswiderstandes bildend, **dadurch gekennzeichnet,**
**dass** die Anordnung der Sacklöcher aus im Wechsel angeordneten ersten Sacklochgruppen einer Länge (a) und einer Anzahl (x) von mehreren flachen Sacklöchern (4.1) und zweiten Sacklochgruppen einer Länge (b) und einer Anzahl (y) von mehreren tiefen Sacklöchern (4.2) besteht und die flachen Sacklöcher (4.1) nur in das Trägermaterial (1) und die tiefen Sacklöcher (4.2) durch das Trägermaterial (1) und die Schaumstoffschicht (2) hindurch in die Dekorschicht (3) ragen, so dass im Bereich der ersten Sacklochgruppen die Schaumstoffschicht (2) als Stützschicht erhalten bleibt.

## Claims

1. Method for introducing a weakened line with a low opening resistance into an airbag cover, comprising a substrate (1), a foam material layer (2) and a decorative layer (3), in which a row of blind holes is produced by means of a laser beam, **characterised in that** alternately first groups of blind holes with a length (a) and with a quantity (x) of a plurality of shallow blind holes (4.1) are produced only in the substrate material (1) and second groups of blind holes with a length (b) and with a quantity (y) of a plurality of deep blind holes (4.2) are produced through the substrate material (1) and the foam material layer (2) into the decorative layer (3), and in the region of the first groups of blind holes the foam material layer (2) is retained as a supporting layer.

2. Method as claimed in Claim 1, **characterised in that** the second groups of blind holes are produced with a greater length (b) than the first groups of blind holes with a length (a).

3. Method as claimed in Claim 1 or 2, **characterised in that** the deep blind holes (4.2) are produced in a greater quantity (y) than the shallow blind holes in a quantity (x).

4. Method as claimed in any one of Claims 1 to 3, **characterised in that** the blind holes (4) are produced so that they overlap.

5. Method as claimed in any one of Claims 1 to 4, **characterised in that** the deep blind holes (4.2) are produced in the decorative layer (3) up to a residual wall thickness (e) of less than one tenth of a millimetre.

6. Method as claimed in any one of Claims 1 to 5, **characterised in that** the laser beam is pulsed and controlled in such a way that the distance between centres (d) of all blind holes relative to one another is constant.

7. Airbag cover with a weakened line with a low opening resistance, comprising a substrate (1), a foam material layer (2) and a decorative layer (3) and an arrangement of blind holes extending in a line into the decorative layer (3) and forming the weakened line with a low opening resistance, **characterised in that** the arrangement of the blind holes comprises alternately disposed first groups of blind holes with a length (a) and a quantity (x) of a plurality of shallow pocket holes (4.1) and second groups of blind holes with a length (b) and a quantity (y) of a plurality of deep blind holes (4.2), and the shallow blind holes (4.1) only project into the substrate (1) and the deep blind holes (4.2) project through the substrate material (1) and the foam material layer (2) into the decorative layer (3), so that the foam material layer (2) remains as a supporting layer in the region of the first groups of blind holes.

## Revendications

1. Procédé destiné à réaliser une ligne de fragilisation avec une faible résistance à l'ouverture dans un capot de coussin gonflable, formé par une couche de support (1), une couche de plastique alvéolaire (2) et une couche décorative (3), dans lequel une série de trous borgnes (4) sont réalisés au moyen d'un rayon laser, **caractérisé en ce que** l'on réalise en alternance des premiers groupes de trous borgnes avec une longueur (a) et un nombre (x) de plusieurs trous borgnes plats (4.1) uniquement dans la couche de support (1), ainsi que des deuxièmes groupes de trous borgnes avec une longueur (b) et un nombre (y) de plusieurs trous borgnes profonds (4.2) à travers la couche de support (1) et la couche de plastique alvéolaire (2) jusque dans la couche décorative (3) et, dans la zone des premiers groupes de trous borgnes, la couche de plastique alvéolaire (2) est conservée sous forme de couche d'appui.

2. Procédé selon la revendication 1, **caractérisé en ce que** la longueur (b) des deuxièmes groupes de trous borgnes réalisés est plus grande que la longueur (a) des deuxièmes groupes de trous borgnes réalisés.

3. Procédé selon la revendication 1 ou 2, **caractérisé en ce que** le nombre (y) de trous borgnes profonds (4.2) réalisés est plus grand que le nombre (x) de trous borgnes plats (4.1) réalisés.

4. Procédé selon l'une quelconque des revendications 1 à 3, **caractérisé en ce que** les trous borgnes (4) sont réalisés en chevauchement.

5. Procédé selon l'une quelconque des revendications 1 à 4, **caractérisé en ce que** les trous borgnes profonds (4.2) sont réalisés dans la couche décorative (3) jusqu'à une épaisseur de paroi restante (e) inférieure à un dixième de millimètre.

6. Procédé selon l'une quelconque des revendications 1 à 5, **caractérisé en ce que** le rayon laser est pulsé et est commandé de telle sorte que les entraxes (d) entre tous les trous borgnes (4) sont constants les uns par rapport aux autres.

7. Capot de coussin gonflable comportant une ligne de fragilisation avec une faible résistance à l'ouverture, formé par une couche de support (1), une couche de plastique alvéolaire (2) et une couche décorative (3) et un agencement linéaire de trous borgnes, s'étendant dans la couche décorative (3) et formant la ligne de fragilisation avec une faible résistance à l'ouverture, **caractérisé en ce que** l'agencement de trous borgnes est constitué par une alternance de premiers groupes de trous borgnes avec une longueur (a) et un nombre (x) de plusieurs trous borgnes plats (4.1) et de deuxièmes groupes de trous borgnes avec une longueur (b) et un nombre (y) de plusieurs trous borgnes profonds (4.2), et les trous borgnes plats (4.1) sont réalisés seulement dans la couche de support (1) et les trous borgnes profonds (4.2) s'étendent à travers la couche de support (1) et la couche de plastique alvéolaire (2) jusque dans la couche décorative (3), de telle sorte que, dans la zone des premiers groupes de trous borgnes, la couche de plastique alvéolaire (2) est conservée sous forme de couche d'appui.
